# FASCICULE DE BREVET EUROPEEN

(11) **EP 2 454 321 B1**
(45) Date de publication et mention de la délivrance du brevet: **07.01.2015**
(21) Numéro de dépôt: 10752003.3
(22) Date de dépôt: 13.07.2010
(51) Int. Cl.: C08L 67/04

(54) **COMPOSITION DE POLYHYDROALKANOATE PRESENTANT UNE RESISTANCE AU CHOC AMELIOREE**
ZUSAMMENSETZUNG AUS POLYHYDROXYALKANSÄURE MIT VERBESSERTER SCHLAGFESTIGKEIT
POLYHYDROXYALKANOATE COMPOSITION WITH AN IMPROVED IMPACT RESISTANCE

(30) Priorité: 17.07.2009 FR 0954956; 15.02.2010 FR 1051020
(43) Date de publication de la demande: 23.05.2012
(73) Titulaire: Arkema France, 92700 Colombes (FR)
(72) Inventeur: BOUILLOUX, Alain, F-27300 Saint-leger De Rotes (FR); QUINEBECHE, Sébastien, F-27300 Bernay (FR); GIROIS, Stephane, F-69530 Brignais (FR)
(86) Numéro de dépôt international: PCT/FR2010/051471
(87) Numéro de publication internationale: WO 2011/007092

(56) Documents cités:
- EP-A1- 1 881 036
- EP-A1- 2 113 532
- EP-A2- 2 199 341
- WO-A1-2005/059031
- WO-A1-2009/131079
- FR-A1- 2 902 434
- US-A1- 2008 071 008

## Description

### Domaine technique :

La présente invention concerne une composition de polyhydroxyalkanoate (PHA) présentant une résistance aux chocs améliorée.

### Etat de la technique :

Les polymères de type polyhydroxyalkanoate ou acide polyhydroxyalcanoïque (PHA), tels que le poly acide lactique (PLA), sont des polymères qui peuvent être obtenus à partir d'un monomère d'origine végétale. En raison de leurs propriétés biodégradables, ils présentent un intérêt majeur. Toutefois, il s'agit de polymères particulièrement fragiles qui nécessitent un renforcement aux chocs.

Dans l'état de la technique, on peut citer le document JP H09-316310 décrit des compositions de PLA renfermant des copolymères éthylène-méthacrylate de glycidyle greffés avec du polystyrène ou du polydiméthacrylate ou encore, des polyoléfines greffées avec l'anhydride maléique.

Plus récemment, WO 2005/059031 décrit une composition de PLA comprenant de 3 à 40% en masse d'un copolymère de l'éthylène, d'un ester d'acide carboxylique et d'un ester de glycidyle.

Dans le document US 2008/0071008 est décrite une composition de poly acide hydroalcanoïque comprenant de 0,2 à 10% de composé coeur-écorce ayant un indice de réfraction inférieur à 1,5 et ne comprenant pas de monomère aromatique vinylique.

On connait enfin le document FR 2902434 qui divulgue des compositions à base de PLA renfermant un copolymère éthylène / (méth)acrylate de glycidyle et un copolymère éthylène / (méth)acrylate d'alkyle.

Ces compositions présentent certes une résistance aux chocs améliorée, toutefois, cette résistance n'est pas totalement satisfaisante, notamment à une température inférieure à 20°C.

D'autre part, certaines de ces compositions présentent une fluidité nettement inférieure à celle du PHA. Cette baisse importante de fluidité est nuisible à la mise en oeuvre, tout particulièrement pour les pièces injectées fines et de grande dimension.

Le but de la présente invention est de proposer une nouvelle composition de PHA qui présente une bonne résistance aux chocs, notamment à basse température.

### Résumé de l'invention :

La présente invention concerne une composition de polyhydroxyalkanoate (PHA) comprenant, en outre, un composé élastomérique coeur-écorce (A) et un copolymère oléfinique statistique (B) comprenant un monomère éthylénique portant une fonction époxy.

Cette composition particulière comprenant un modifiant choc associant un composé coeur-écorce avec un copolymère oléfinique présente des propriétés choc exceptionnelles et, de manière surprenante, bien supérieures à celles des compositions de l'art antérieur et en particulier bien supérieures aux compositions comprenant un modifiant choc constitué d'un copolymère oléfinique comprenant un monomère éthylénique portant une fonction époxy ou un composé coeur-écorce.

La composition présente également l'avantage d'avoir une excellente fluidité lors de sa mise en oeuvre.

Le monomère éthylénique portant une fonction époxy est préférentiellement le (méth)acrylate de glycidyle.

Le copolymère (B) peut être un copolymère de l'éthylène, du méthacrylate de glycidyle et éventuellement un acrylate et/ou un méthacrylate d'alkyle dont la chaîne alkyle comprend de 1 à 30 atomes de carbone, ceux-ci étant regroupés sous le terme (méth)acrylate d'alkyle dans la présente description. La quantité de (méth)acrylate d'alkyle peut être comprise dans la gamme allant de 0 (c'est-à-dire qu'il n'en comprend pas) à 40% par rapport à la masse totale dudit copolymère oléfinique (B), avantageusement de 5% à 35%, de manière préférée de 20 à 30%.

La quantité de monomère éthylénique portant une fonction époxy dans ledit copolymère oléfinique (B) est comprise par exemple dans la gamme allant de 0,1 à 20% par rapport à sa masse totale, avantageusement de 2 à 15% et de manière préférée de 5 à 10%.

La composition peut également comprendre en outre un polymère oléfinique additionnel (C) différent des copolymères oléfiniques comprenant un monomère éthylénique portant une fonction époxy. Préférentiellement, ce polymère oléfinique additionnel (C) est un copolymère de l'éthylène et d'un (méth)acrylate d'alkyle, un copolymère d'éthylène et d'un ester vinylique d'acide carboxylique, un copolymère d'éthylène et d'un acide (méth)acrylique ou un ionomère, tout préférentiellement un copolymère d'éthylène et d'un acrylate d'alkyle ayant une chaîne alkyle allant de 1 à 20 comme par exemple l'acrylate de méthyle, l'acrylate d'éthylène ou l'acrylate de n-butyle. Dans ce cas, la composition a avantageusement un ratio massique (B)/(C) compris dans la gamme allant de 90/10 à 10/90, préférentiellement de 75/25 à 40/60.

Avantageusement, le ratio massique (A)/((B)+(C) éventuel) est compris dans la gamme allant de 90/10 à 10/90, par exemple 85/15 à 40/60, plus avantageusement de 80/20 à 50/50 et préférentiellement de 75/25 à 60/40.

La quantité de modifiant ((A)+(B)+(C) éventuel) peut être comprise dans la gamme allant de 1 à 30% en masse de la composition totale, avantageusement de 2 à 15%, préférentiellement de 3 à 9%.

La quantité, sous forme polymérisée, de monomère éthylénique comprenant une fonction époxy peut être comprise dans la gamme allant de 0,01% à 2%, avantageusement de 0,02 à 1% préférentiellement de 0,03 à 0,7% par rapport à la masse de la composition totale.

En ce qui concerne le composé coeur-écorce élastomérique (A), la température de transition vitreuse du polymère de coeur est préférentiellement inférieure à 20°C, par exemple comprise entre -140°C et 0°C. Préférentiellement, la température de transition vitreuse du polymère de coeur est supérieure à 20°C, par exemple entre 30°C et 250°C.

En ce qui concerne le composé coeur-écorce élastomérique (A), sa partie écorce comprend préférentiellement sous forme polymérisée :
▪ un méthacrylate d'alkyle dont la chaîne alkyle comprend de 1 à 12 atomes de carbone, de préférence de 1 à 4 ;
▪ et/ou un composé organique aromatique vinylique comprenant de 6 à 12 atomes de carbone tel que le styrène ;
▪ et/ou de l'acrylonitrile ;
cette partie écorce étant ou non réticulée.

La partie coeur du composé coeur-écorce (A) comprend avantageusement sous forme polymérisée :
▪ un diène conjugué comprenant de 4 à 12 atomes de carbone, de préférence de 4 à 8 ;
▪ ou un acrylate d'alkyle dont la chaîne alkyle comprend de 1 à 12 atomes de carbone, de préférence de 1 à 8.

Le composé coeur-écorce (A) peut être choisi parmi :
▪ un composé ayant un coeur comprenant du butadiène et une écorce comprenant du méthacrylate de méthyle, de l'acrylate d'éthyle, de l'acrylate de butyle, de l'acide méthacrylique et/ou du styrène ;
▪ un composé ayant un coeur comprenant de l'acrylate de butyle, de l'acrylate de n-octyle et/ou de l'acrylate de 2-éthylhexyle et une écorce comprenant du méthacrylate de méthyle;
▪ un composé ayant un coeur comprenant du butadiène et une écorce comprenant un mélange d'acrylonitrile et de styrène.

En ce qui concerne le composé coeur-écorce, la quantité de massique de coeur est avantageusement comprise dans la gamme allant de 10 à 99% de la masse totale du composé coeur-écorce, par exemple de 60 à 95%.

La taille des composés coeur-écorce est avantageusement comprise entre et 50 et 600 nm.

Préférentiellement, le PHA est choisi parmi le polyacide lactique (PLA) et le polyacide glycolique (PGA).

L'invention a également pour objet un procédé de préparation de la composition de PHA modifiée dans lequel on réalise par extrusion le mélange du PHA, de (A), de (B), du (C) éventuel avec éventuellement un ou plusieurs additifs tel qu'un agent nucléant.

Selon un procédé préféré de l'invention, on réalise :
▪ un mélange de (A), (B) et (C) éventuel pour former un modifiant choc dans une première étape puis,
▪ dans une seconde étape le mélange du modifiant choc issu de la première étape avec le PHA.

Selon un autre procédé de réalisation de la susdite composition objet de la présente invention, on réalise :
- une première étape de fabrication du modifiant choc par mélange à une température à laquelle le copolymère est à l'état fondu et à une température maximale comprise dans la gamme allant de 60 à 180°C ;
- une seconde étape de fabrication de la composition de polyacide hydroxyalcanoïque (PHA) par extrusion ou par mélange du modifiant choc obtenu à la première étape et dudit PHA.

Avantageusement, l'étape de fabrication du modifiant choc de la première étape est réalisée de manière à ce que la température maximale est comprise dans la gamme allant de 70 à 140°C.

Selon un mode de réalisation, l'étape de fabrication du susdit modifiant choc de la première étape se fait par extrusion dans une extrudeuse bi-vis ou mono-vis, préférentiellement en mono-vis. Selon un mode de réalisation, l'étape de fabrication du modifiant choc de la première étape se fait par mélange à l'état fondu dans une extrudeuse bi-vis corotative ou une extrudeuse bi-vis contrarotative ou un co-malaxeur ou un mélangeur interne ou une extrudeuse mono-vis, préférentiellement dans une extrudeuse mono-vis. Il est entendu que toutes les étapes de fabrication du modifiant choc, y compris un mélange à l'état fondu, sont considérées ici comme des extrusions.

Préférentiellement, le temps de séjour du modifiant choc de la première étape est compris dans la gamme allant de 10 à 300 secondes.

Selon un mode de réalisation, la seconde étape de fabrication du mélange du modifiant choc obtenu à la première étape et du susdit PHA peut être réalisée de manière à ce que la température de mélange soit comprise dans la gamme allant de 180 à 320°C.

Un objet de l'invention est une pièce ou un objet, comme par exemple un emballage comprenant la composition de PHA modifiée.

L'invention porte également sur un procédé de fabrication de la pièce ou de l'objet comprenant une étape de mise en forme de ladite composition, par exemple par injection, pressage ou calandrage, ladite pièce ou ledit objet subissant éventuellement une étape de recuit.

### Description détaillée de l'invention

La présente invention concerne une composition de polyacide hydroxyalcanoïque (PHA) comprenant, en outre un composé élastomérique de type coeur-écorce et un copolymère oléfinique statistique comprenant un monomère éthylénique portant une fonction époxy.

Selon l'invention, lorsqu'un des polymères de la composition ou une composition « comprend un monomère », cela signifie qu'il est présent sous forme polymérisée dans ledit polymère ou un (ou des) polymère de ladite composition.

Les polymères de type PHA sont des polymères biodégradables. Certains d'entre eux sont également biorenouvelables, les monomères étant produits par des procédés de fermentation par des bactéries ou encore extraits de plantes. Le terme « biodégradable » s'applique à un matériau s'il peut être dégradé par des micro-organismes. Le résultat de cette dégradation est la formation d'eau, de CO₂ et/ou de CH₄ et, éventuellement, des sous-produits (résidus, nouvelle biomasse) non toxiques pour l'environnement. On peut par exemple utiliser la norme EN13432 pour déterminer si le matériau est biodégradable. Pour déterminer si un polymère est « biorenouvelable », on peut utiliser la norme ASTM D 6866. Les polymères biorenouvelables se caractérisent en ce qu'ils comprennent du carbone d'origine renouvelable, c'est-à-dire du ¹⁴C. En effet, tous les échantillons de carbone tirés d'organismes vivants et en particulier de la matière végétale utilisée pour former les polymères biorenouvelables, sont un mélange de trois isotopes : ¹²C, ¹³C et ¹⁴C dans un rapport ¹⁴C/¹²C maintenu constant par échange continu du carbone avec l'environnement et qui est égal à 1,2 x 10⁻¹² . Bien que le ¹⁴C soit radioactif et que sa concentration décroisse donc au cours du temps, sa demi-vie est de 5730 ans, de sorte qu'on estime que la teneur en ¹⁴C est constante depuis l'extraction de la matière végétale jusqu'à la fabrication des polymères biorenouvelables et même jusqu'à la fin de leur utilisation. Par exemple, on peut considérer que le polymère est biorenouvelable lorsque le rapport ¹⁴C/¹²C est supérieur ou égal à 1 x 10⁻¹².

La teneur en ¹⁴C des polymères biorenouvelables peut être mesurée par exemple selon les techniques suivantes de spectrométrie à scintillation liquide ou de spectrométrie de masse. Ces méthodes de mesure de la teneur en ¹⁴C des matériaux sont décrites précisément dans les normes ASTM D 6866 (notamment D6866-06) et dans les normes ASTMD 7026 (notamment 7026-04). Ces méthodes mesurent le rapport ¹⁴C/¹²C d'un échantillon et le comparent avec le rapport ¹⁴C/¹²C d'un échantillon référence d'origine 100% renouvelable, pour donner un pourcentage relatif de carbone d'origine renouvelable dans l'échantillon.

La méthode de mesure préférentiellement utilisée dans le cas des polymères biorenouvelables est la spectrométrie de masse décrite dans la norme ASTM D6866-06 (« accelerator mass spectroscopy »).

Les PHA sont des polymères comprenant des motifs acide hydroxyalcanoïque, ayant par exemple de 2 à 10 atomes de carbone. On peut citer comme exemple le polymère comprenant de l'acide 6-hydroxyhexanoïque connu sous le nom polycaprolactone (PCL), les polymères comprenant de l'acide 3-hydroxyhexanoïque, l'acide 4-hydroxyhexanoïque ou de l'acide 3-hydroxyheptanoïque. On peut noter en particulier les polymères ayant 5 atomes de carbone ou moins, par exemple les polymères comprenant de l'acide glycolique (PGA), de l'acide lactique (PLA), 3-hydroxypropionate, 2-hydroxybutyrate, 3-hydroxybutyrate (PHB), 4-hydroxybutyrate, 3-hydroxyvalerate, 4-hydroxyvalerate and 5-hydroxyvalerate. Des polymères préférés sont le PGA, le PCL, le PLA et le PHB. Les PHA peuvent être aliphatiques.

Les PHA peuvent également être des copolymères, c'est-à-dire comprendre un premier acide hydroxyalcanoïque et un autre motif qui peut être soit un second acide hydroxyalcanoïque différent du premier, soit un autre monomère tel que les diols comme l'éthylène glycol, le 1,3-propanediol et le 1,4-butanediol ou les diacides tels que l'acide succinique, l'acide adipique et l'acide téréphthalique.

Les compositions de l'invention peuvent également comprendre des mélanges de ces polymères.

Les PHA sont souvent polymérisés en masse. Un PHA peut être synthétisé par déshydratation et condensation de l'acide hydroalcanoïque. Il peut également être synthétisé par désalcoolisation et condensation d'un ester d'alkyle d'un acide hydroalcanoïque ou par polymerisation par ouverture de cycle d'un dérivé cyclique du lactone correspondant ou du dimère de l'ester cyclique. La polymerisation en masse est généralement réalisée par un procédé batch ou continu. A titre d'exemple de procédés de fabrication de PHA continus, on peut citer les procédés des demandes de brevet JP-A 03-502115, JP-A 07-26001, JP-A 07-53684. Les brevets US 2,668,162 et US 3,297,033 décrivent quant à eux des procédés batch.

S'agissant du copolymère coeur écorce (A), il se présente sous la forme de fines particules ayant un coeur en polymère mou et au moins une écorce en polymère dur, la taille des particules est en général inférieure au µm et avantageusement comprise entre 50 et 600 nm.

Préférentiellement, le polymère du coeur a une température de transition vitreuse inférieure à 20°C, par exemple comprise entre -140°C et 0°C, préférentiellement entre -120 et -30°C. Préférentiellement, le polymère de l'écorce a une température de transition vitreuse supérieure à 20°C, par exemple entre 30°C et 250°C.

Les températures de transition vitreuse des polymères de la composition peut être mesurée selon la norme ISO 11357-2:1999.

A titre d'exemple de polymère du coeur on peut citer les homopolymères de l'isoprène ou du butadiène, les copolymères isoprène-butadiène, les copolymères de l'isoprène avec au plus 98% en poids d'un monomère vinylique et les copolymères du butadiène avec au plus 98% en poids d'un monomère vinylique. Le monomère vinylique peut être le styrène, un alkylstyrène, l'acrylonitrile, un (méth)acrylate d'alkyle, le butadiene ou l'isoprène. Le polymère de coeur peut également comprendre du siloxane, éventuellement copolymérisé avec un acrylate d'alkyle. Le coeur du copolymère coeur écorce peut être réticulé en tout ou partie. Il suffit pour ceci d'ajouter des monomères au moins difonctionnels au cours de la préparation du coeur, ces monomères peuvent être choisis parmi les esters poly(méth)acryliques de polyols tels que le di(méth)acrylate de butylène et le triméthylol propane triméthacrylate. D'autres monomères multifonctionnels sont par exemple le divinylbenzène, le trivinylbenzène, l'acrylate de vinyle et le méthacrylate de vinyle, le triallyle cyanurate. On peut aussi réticuler le coeur en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maléique, l'acide (méth)acrylique et le méthacrylate de glycidyle. On peut aussi réticuler en utilisant la réactivité intrinsèque des monomères, par exemple les dièniques.

L'écorce ou les écorces sont des homopolymères du styrène, d'un alkylstyrène ou du méthacrylate de méthyle ou des copolymères comprenant au moins 70% en poids de l'un de ces monomères précédents et au moins un comonomère choisi parmi les autres monomères précédents, un autre (méth)acrylate d'alkyle, l'acétate de vinyle et l'acrylonitrile. L'écorce peut être fonctionnalisée en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maléique, l'acide (méth)acrylique, le méthacrylate de glycidyle, le méthacrylate d'hydroxyéthyle et les (méth)acrylamides d'alkyle. A titre d'exemple on peut citer des copolymères coeur - écorce ayant une écorce en polystyrène et des copolymères coeur - écorce ayant une écorce en PMMA. L'écorce peut aussi contenir des fonctions imides, soit par copolymérisation avec un maléimide, soit par modification chimique du PMMA par une amine primaire. Avantageusement, le % molaire de fonctions imides est de 30 à 60% (par rapport à l'ensemble de l'écorce). Il existe aussi des copolymères coeur-écorce ayant deux écorces, l'une en polystyrène et l'autre à l'extérieur en PMMA. Des exemples de copolymère ainsi que leur procédé de préparation sont décrits dans les brevets suivants : US 4 180 494, US 3 808 180, US 4096 202, US 4 260 693, US 3 287 443, US 3 657 391, US 4 299 928, US 3 985 704, US5773520.

Le coeur représente par exemple dans cette invention, en poids, 5 à 95% du composé coeur écorce et l'écorce 95 à 5%.

A titre d'exemple de copolymère on peut citer celui constitué (i) de 50 à 95 parties d'un coeur comprenant en moles au moins 93% de butadiène, 5% de styrène et 0,5 à 1% de divinylbenzène et (ii) de 5 à 50 parties de deux écorces essentiellement de même poids l'une intérieure en polystyrène et l'autre extérieure en PMMA.

Préférentiellement, on peut utiliser les composés coeur-écorce ayant un coeur en copolymère de l'acrylate de butyle et une écorce en PMMA. Ces composés présentent l'avantage d'être particulièrement transparents.

Tous ces composés coeur-écorce sont parfois appelés mou / dur à cause du coeur en élastomère. On ne sortirait pas du cadre de l'invention en utilisant des copolymères coeur écorce tels que les dur / mou / dur, c'est à dire des copolymère qui ont dans cet ordre un coeur dur, une écorce molle et une écorce dure. Les parties dures peuvent être constituées des polymères de l'écorce des mou / dur précédents et la partie molle peut être constituée des polymères du coeur des mou / dur précédents.

On peut citer par exemple ceux décrit dans EP 270865, et ceux constitués dans cet ordre :
d'un coeur en copolymère du méthacrylate de méthyle et de l'acrylate d'éthyle,
d'une écorce en copolymère de l'acrylate de butyle et du styrène,
d'une écorce en copolymère du méthacrylate de méthyle et de l'acrylate d'éthyle.

Il existe encore d'autres types de copolymères coeur écorce tels que les dur (le coeur) / mou / mi dur. Par rapport aux précédents la différence vient de l'écorce extérieure "mi dur" qui est constituée de deux écorces : l'une intermédiaire et l'autre extérieure. L'écorce intermédiaire est un copolymère du méthacrylate de méthyle, du styrène et d'au moins un monomère choisi parmi les acrylates d'alkyle, le butadiène et l'isoprène. L'écorce extérieure est un PMMA homopolymère ou copolymère.

On peut citer par exemple ceux constitués dans cet ordre :
d'un coeur en copolymère du méthacrylate de méthyle et de l'acrylate d'éthyle,
d'une écorce en copolymère de l'acrylate de butyle et du styrène,
d'une écorce en copolymère du méthacrylate de méthyle, de l'acrylate de butyle et du styrène,
d'une écorce en copolymère du méthacrylate de méthyle et de l'acrylate d'éthyle.

Des composés (A) sont commercialisés par la demanderesse sous les marques Biostrength^{®}, Durastrength^{®} et Clearstrength^{®}.

Le polymère (B) comprend un monomère éthylénique portant une fonction époxy. Il s'agit d'un copolymère statistique. Le monomère éthylénique portant une fonction époxy être un époxyde insaturé comme :
▪ les esters et éthers de glycidyle aliphatiques tels que l'allyl glycidyléther, le vinyl glycidyléther, le maléate et l'itaconate de glycidyle, le (méth)acrylate de glycidyle, et
▪ les esters et éthers de glycidyle alicycliques tels que le 2-cyclohexène-1-glycidyléther, le cyclohexéne-4,5-diglycidyl carboxylate, le cyclohexène-4-glycidyl carboxylate, le 5-norbornène-2-méthyl-2-glycidyl carboxylate et l'endo cis-bicyclo(2,2,1)-5-heptène-2,3-diglycidyl dicarboxylate.

On préfère le méthacrylate de glycidyle comme monomère éthylénique portant une fonction époxy.

Préférentiellement, le polymère (B) est un copolymère oléfinique comprenant un monomère éthylénique portant une fonction époxy, c'est-à-dire que c'est un copolymère du monomère éthylénique sus-mentionné et d'au moins une alpha-oléfine, pouvant comprendre de 2 à 20 atomes de carbone, tel que l'éthylène ou le propylène, préférentiellement de l'éthylène.

Le copolymère oléfinique peut en outre comprendre au moins un monomère différent des alpha-oléfines précitées et du monomère éthylénique portant une fonction époxy. On peut citer à titre non limitatif :
- un diène conjugué, tels que par exemple le 1,4-hexadiène ;
- du monoxyde de carbone ;
- un ester d'acide carboxylique insaturé tels que par exemple les (méth)acrylates d'alkyle ;
- un ester vinylique d'acide carboxylique saturé tel que par exemple l'acétate de vinyle ou le propionate de vinyle.

Selon un mode avantageux, le copolymère oléfinique comprend un (méth)acrylate d'alkyle. La chaîne alkyle peut avoir jusqu'à 24 carbones. On préfère ceux dont la chaîne alkyle comprend de 1 à 12 atomes de carbone, avantageusement de 1 à 6, voire de 1 à 4. Avantageusement, les (méth)acrylates d'alkyle sont l'acrylate de n-butyle, l'acrylate d'isobutyle, l'acrylate de 2-éthylhexyle, l'acrylate d'éthyle et l'acrylate de méthyle. Préférentiellement, les (méth)acrylates d'alkyle sont l'acrylate de n-butyle, l'acrylate d'éthyle et l'acrylate de méthyle. De manière toute préférée, il s'agit de l'acrylate de méthyle.

Les polymères tout préférés sont les copolymères éthylène-acrylate d'alkyle-méthacrylate de glycidyle et les copolymères éthylène-méthacrylate de glycidyle.

La quantité en monomère différent du monomère éthylénique portant une fonction époxy et des alpha-oléfines, comme le (méth)acrylate d'alkyle, peut être comprise dans la gamme allant de 0 (c'est-à-dire qu'il n'en comprend pas) à 40% par rapport à la masse totale dudit copolymère oléfinique (B), avantageusement de 5% à 35%, de manière préférée de 20 à 30%.

La quantité de monomère éthylénique portant une fonction époxy dans ledit copolymère oléfinique (B) est comprise par exemple dans la gamme allant de 0,1 à 20% par rapport à sa masse totale, avantageusement de 2 à 15% et de manière préférée de 5 à 10%.

Des copolymères (B) sont commercialisés par la demanderesse sous la marque Lotader^{®}.

La composition de l'invention peut également comprendre un polymère oléfinique additionnel (C) comme, par exemple, des copolymères de l'éthylène différents de (B), c'est-à-dire ne comprenant pas de monomère portant une fonction époxy. Ceux-ci peuvent être choisis parmi les copolymères comprenant de l'éthylène et un ester vinylique ou les copolymères comprenant de l'éthylène et un (méth)acrylate d'alkyle, tels que les copolymères constitués d'éthylène et d'un (méth)acrylate d'alkyle. La chaîne alkyle du (méth)acrylate peut avoir jusqu'à 20 carbones. On préfère ceux dont la chaîne alkyle comprend de 1 à 12 atomes de carbone, avantageusement de 1 à 6, voire de 1 à 4. Avantageusement, les (méth)acrylates d'alkyle sont l'acrylate de n-butyle, l'acrylate d'isobutyle, l'acrylate de 2-éthylhexyle, l'acrylate d'éthyle et l'acrylate de méthyle. Préférentiellement, les (méth)acrylates d'alkyle sont l'acrylate de n-butyle, l'acrylate d'éthyle et l'acrylate de méthyle. Préférentiellement, la quantité de (méth)acrylate d'alkyle va de 1 à 40% par rapport à la masse totale dudit copolymère oléfinique (C), avantageusement de 5% à 35%, de manière préférée de 20 à 30%.

Des copolymères (C) sont commercialisés par la demanderesse sous la marque Lotryl^{®}.

Les quantités des différents monomères présents dans les différents polymères de l'invention peuvent être mesurées par spectroscopie infrarouge, par exemple en utilisant la méthode décrite dans la norme ISO8985.

Les procédés de fabrication des copolymères (B) et (C) sont connus. On peut les fabriquer par polymérisation radicalaire à haute pression, par exemple en réacteur tubulaire ou autoclave.

Selon un mode tout préféré de l'invention, la composition de polyacide hydroxyalcanoïque (PHA) comprend, en outre :
(A) un composé élastomérique de type coeur-écorce ;
(B) un copolymère choisi parmi les copolymères de l'éthylène et du méthacrylate de glycidyle ; et
(C) un copolymère de l'éthylène et d'un (méth)acrylate d'alkyle dont la chaîne alkyle comprend de 1 à 20 atomes de carbone.

La composition peut comprendre en outre des additifs permettant d'améliorer certaines propriétés de la composition de PHA, comme les agents nucléants, les plastifiants, les colorants, les absorbants UV, les stabilisants, les antioxydants, les charges, les agents retardateurs de flamme, les lubrifiants, les agents antibloquants, les agents démoulants ou des additifs facilitant le procédé couramment appélés « processing aids ».

La composition selon l'invention peut être fabriquée en mélangeant les différents constituants par les moyens classiques de mise en oeuvre des thermoplastiques, comme par exemple l'extrusion ou le malaxage. On peut utiliser des mélangeurs interne à pales ou à rotors, un mélangeur externe, des extrudeuses mono-vis, bi-vis co-rotatives ou contrarotatives. Préférentiellement, la composition est réalisée à une température supérieure ou égale à la température de transition vitreuse du PHA, voire au dessus. La composition peut être réalisée par exemple à une température comprise dans la gamme allant de 160°C à 260°C.

Selon un procédé préféré de l'invention, on réalise une étape de mélange d'un modifiant choc dans le PHA, ledit modifiant choc étant un mélange comprenant (A), (B) et le (C) éventuel.

Le composé (A) étant pulvérulent, on facilite le procédé de fabrication de la composition de PHA en mélangeant (A) avec (B) et le (C) éventuel, le modifiant choc ainsi obtenu pouvant alors être sous forme de granulés qui sont plus facilement manipulables lors du procédé de transformation du PHA.

Un autre objet de l'invention est une pièce ou un objet, tel qu'un emballage, un film ou une feuille, fabriqué à partir de la composition selon l'invention.

Pour fabriquer cette pièce ou cet objet, on peut utiliser les techniques connues de moulage, tel qu'une presse, une presse injectée ou encore les techniques connues d'extrusion soufflage dite de « blow molding ». On peut également fabriquer les films ou les feuilles par les techniques d'extrusion de film à plat (« cast film »), d'extrusion soufflage de gaine (« blown film ») ou encore de calandrage.

Le procédé de fabrication de cette pièce peut également comprendre une étape de recuit permettant de cristalliser le PHA et d'ainsi améliorer ses propriétés mécaniques.

Des exemples de composition vont maintenant être décrits dans les exemples qui viennent ; ces exemples sont donnés à titre illustratif et ne limitent aucunement la portée de l'invention revendiquée.

### Exemples

Pour réaliser des exemples de la composition et des structures selon l'invention, on a utilisé les produits suivants :
(a1) : composé coeur-écorce core-shell à base de butadiène, méthacrylate de méthyle, acrylate d'éthyle et acrylate de butyle.
(a2) : composé coeur-écorce à base d' acrylate de butyle et de méthacrylate de méthyle.
(a3) : composé coeur-écorce comprenant de l'acrylonitrile, du butadiène et du styrène.
(b) : copolymère éthylène - acrylate de méthyle - méthacrylate de glycidyle comprenant en poids 25% d'acrylate et 8% de méthacrylate de glycidyle (Lotader® AX 8900) dont la température de fusion mesurée par DSC (ISO 11357-03) est de 65°C.
(c) : copolymère éthylène - acrylate de butyle comprenant en poids 30% d'acrylate (Lotryl® 30BA02) dont la température de fusion mesurée par DSC (ISO 11357-03) est de 78°C.
(d) : Poly acide lactique 2002D commercialisé par NatureWorks®.

Les compositions selon l'invention (4) et (5) et comparatives (1) (2) et (3) comprennent les constituants (a), (b1), (b2), (b3), (c) et (d) dans les proportions du Tableau 1.

Les compositions (1) à (5) ont été préparées en une seule étape. Le mélange des constituants dans le ratio du Tableau 1 est réalisé par extrusion. L'extrusion est réalisée dans une extrudeuse de type bi-vis co-rotative dont le diamètre est 16mm et le rapport L/D est 25 (Haake PTW16/25). La température maximale du mélange est de 240°C.

Les constituants (b1), (b2) et (b3) étant des poudres et l'extrudeuse mentionnée précédemment n'étant équipée que d'un seul doseur, il est nécessaire de broyer les constituants (a) et (d) par cryobroyage jusqu'à l'obtention d'une poudre fine de manière à obtenir un dosage correct des constituants dans l'extrudeuse pour la préparation des mélanges (2) à (5).

Les compositions sont ensuite injectées à 200°C dans un moule régulé à 30°C à l'aide d'une presse à injecter de type Krauss Maffei 60-210 B1.

Les propriétés « Choc Charpy entaillé » sont mesurées selon la norme ISO 179:2000 après recuit des échantillons 1 h à 110°C pour cristalliser le poly acide lactique. Plus la valeur choc charpy est élevée, meilleure est la résistance au choc. Ces propriétés ont été mesurées à température ambiante (23°C) et à froid (0°C et/ou -40°C). Les valeurs obtenues sont reportées dans le Tableau 2.

Les propriétés « Choc Charpy entaillé » sont également mesurées à température ambiante selon la norme ISO 179:2000 sans recuit. Les valeurs obtenues sont reportées dans le Tableau 3.

**Tableau 1**

| Compositions | Pourcentage massique (a)/ ((a)+(b)+(c)+(d)) | Pourcentage massique (b)/ ((a)+(b)+(c)+(d)) | Pourcentage massique (c)/ ((a)+(b)+(c)+(d)) |
|---|---|---|---|
| (1) | 0% | 2% | 8% |
| (2) | a3 : 10% | 0% | 0% |
| (3) | a1 : 10% | 0% | 0% |
| (4) | a1 : 7% | 3% | 0% |
| (5) | a1 : 5% | 5% | 0% |
| (6) | a2 : 7,5% | 7,5% | 0% |
| (7) | a2 : 3% | 3% | 0% |

**Tableau 2**

| Compositions | Choc Charpy 23°C | Choc Charpy 0°C | Choc Charpy -40°C |
|---|---|---|---|
| (1) | 11 | Non mesuré | 6 |
| (2) | 13.5 | Non mesuré | 6.5 |
| (3) | 38 | 15 | 9 |
| (4) | 68 | 39 | 10 |
| (5) | 54 | 39 | 10 |
| (6) | 62 | Non mesuré | Non mesuré |
| (7) | 20 | Non mesuré | Non mesuré |

**Tableau 3 (sans recuit)**

| Compositions | Choc Charpy 23°C |
|---|---|
| (1) | 5 |
| (2) | 9 |
| (3) | 14 |
| (4) | 27 |
| (6) | 50 |

Les compositions préparées selon l'invention présentent des propriétés choc améliorées en comparaison avec celles obtenues à partir de l'art antérieur.

## Revendications

1. Composition de polyacide hydroxyalcanoïque (PHA) comprenant, en outre:
(A) un composé élastomérique de type coeur-écorce;
(B) et un copolymère oléfinique statistique comprenant un monomère éthylénique portant une fonction époxy.

2. Composition selon la revendication 1 **caractérisée en ce que** le monomère éthylénique portant une fonction époxy est le (méth)acrylate de glycidyle.

3. Composition selon l'une des revendications précédentes **caractérisée en ce que** (B) est un copolymère de l'éthylène, du méthacrylate de glycidyle et éventuellement de (méth)acrylate d'alkyle dont la chaîne alkyle comprend de 1 à 30 atomes de carbone.

4. Composition selon l'une des revendications précédentes comprenant en outre un polymère oléfinique additionnel (C) différent des copolymères oléfiniques comprenant un monomère éthylénique portant une fonction époxy.

5. Composition selon la revendication précédente dont le polymère oléfinique additionnel (C) est un copolymère de l'éthylène et d'un (méth)acrylate d'alkyle, un copolymère d'éthylène et d'un ester vinylique d'acide carboxylique, un copolymère d'éthylène et d'un acide (méth)acrylique ou un ionomère, préférentiellement un copolymère d'éthylène et d'un acrylate d'alkyle ayant une chaîne alkyle allant de 1 à 20 comme par exemple l'acrylate de méthyle, l'acrylate d'éthylène ou l'acrylate de n-butyle.

6. Composition selon l'une des revendications 4 ou 5 dans laquelle le ratio massique (B)/(C) est compris dans la gamme allant de 90/10 à 10/90, préférentiellement de 75/25 à 40/60.

7. Composition selon l'une des revendications précédentes dans laquelle le ratio massique (A)/((B)+(C) éventuel) est compris dans la gamme allant de 90/10 à 10/90, par exemple 85/15 à 40/60, avantageusement de 80/20 à 50/50 et préférentiellement de 75/25 à 60/40.

8. Composition selon l'une des revendications précédentes dans laquelle la quantité de ((A)+(B)+(C) éventuel) est comprise dans la gamme allant de 1 à 30% en masse de la composition totale, avantageusement de 2 à 15%, préférentiellement de 3 à 9%.

9. Composition selon l'une des revendications précédentes dans laquelle la quantité, sous forme polymérisée, de monomère éthylénique comprenant une fonction époxy est comprise dans la gamme allant de 0,01 % à 2%, avantageusement de 0,02 à 1 % préférentiellement de 0,03 à 0,7% en masse de la composition totale.

10. Composition selon l'une des revendications précédentes dans laquelle polymère du coeur du composé coeur-écorce (A) a une température de transition vitreuse inférieure à 20°c et le polymère de l'écorce a une température de transition vitreuse supérieure à 20°C.

11. Composition selon l'une des revendications précédentes dans laquelle la quantité de massique de coeur est comprise dans la gamme allant de 60 à 95% de la masse totale du composé coeur-écorce.

12. Composition selon l'une des revendications précédentes dans laquelle la taille des composés coeur-écorce est comprise entre et 50 et 600 nm.

13. Composition selon l'une des revendications précédentes dans laquelle le PHA est choisi parmi le poly acide lactique (PLA) et le poly acide glycolique (PGA).

14. Procédé de préparation de la composition selon l'une quelconque des revendications précédentes dans lequel on réalise par malaxage ou extrusion le mélange du PHA, de (A), de (B), du (C) éventuel et éventuellement des additifs tels qu'un agent nucléant.

15. Procédé de préparation de la composition selon l'une des revendications 1 à 13, dans lequel on réalise :
- dans une première étape un mélange de (A), (B) et (C) éventuel pour former un modifiant choc puis,
- dans une seconde étape le mélange du modifiant choc issu de la première étape avec le PHA.

16. Pièce ou objet, tel qu'un emballage comprenant une composition selon l'une des revendications 1 à 13 ou une composition issue du procédé selon la revendication 14 ou 15.

17. Procédé de fabrication d'une pièce ou d'un objet selon la revendication 16 comprenant une étape de mise en forme de la composition, par exemple par injection, pressage ou calandrage, ladite pièce ou ledit objet subissant éventuellement une étape de recuit.

## Patentansprüche

1. Polyhydroxyalkansäure(PHA)-Zusammensetzung, außerdem umfassend:
(A) eine elastomere Verbindung vom Kern-Schale-Typ
(B) und ein statistisch aufgebautes olefinisches Copolymer, das ein ethylenisches Monomer mit einer Epoxidfunktion umfasst.

2. Zusammensetzung nach Anspruch 1, **dadurch gekennzeichnet, dass** es sich bei dem ethylenischen Monomer mit einer Epoxidfunktion um Glycidyl-(meth)acrylat handelt.

3. Zusammensetzung nach einem der vorhergehenden Ansprüche, **dadurch gekennzeichnet, dass** es sich bei (B) um ein Copolymer von Ethylen, Glycidylmethacrylat und gegebenenfalls Alkyl(meth)acrylat mit 1 bis 30 Kohlenstoffatomen in der Alkylkette handelt.

4. Zusammensetzung nach einem der vorhergehenden Ansprüche, außerdem umfassend ein zusätzliches olefinisches Polymer (C), das von olefinischen Copolymeren, die ein ethylenisches Monomer mit einer Epoxidfunktion umfassen, verschieden ist.

5. Zusammensetzung nach dem vorhergehenden Anspruch, wobei es sich bei dem zusätzlichen olefinischen Polymer (C) um ein Copolymer von Ethylen und einem Alkyl(meth)acrylat, ein Copolymer von Ethylen und einem Carbonsäurevinylester, ein Copolymer von Ethylen und einer (Meth)Acrylsäure oder ein Ionomer, vorzugsweise ein Copolymer von Ethylen und einem Alkylacrylat mit einer Alkylkette im Bereich von 1 bis 20, wie beispielsweise Methylacrylat, Ethylenacrylat oder n-Butylacrylat, handelt.

6. Zusammensetzung nach einem der Ansprüche 4 oder 5, wobei das Gewichtsverhältnis (B)/(C) im Bereich von 90/10 bis 10/90 und vorzugsweise von 75/25 bis 40/60 liegt.

7. Zusammensetzung nach einem der vorhergehenden Ansprüche, wobei das Gewichtsverhältnis (A)/((B) + gegebenenfalls (C)) im Bereich von 90/10 bis 10/90, beispielsweise 85/15 bis 40/60, vorteilhafterweise 80/20 bis 50/50 und vorzugsweise 75/25 bis 60/40 liegt.

8. Zusammensetzung nach einem der vorhergehenden Ansprüche, bei dem die Menge von ((A) + (B) + gegebenenfalls (C)) im Bereich von 1 bis 30 Gew.-% der gesamten Zusammensetzung, vorteilhafterweise 2 bis 15% und vorzugsweise 3 bis 9% liegt.

9. Zusammensetzung nach einem der vorhergehenden Ansprüche, wobei die Menge von einpolymerisiertem ethylenischem Monomer mit einer Epoxidfunktion im Bereich von 0,01 bis 2 Gew.-%, vorteilhafterweise 0,02 bis 1 Gew.-% und vorzugsweise 0,03 bis 0,7 Gew.-% der gesamten Zusammensetzung liegt.

10. Zusammensetzung nach einem der vorhergehenden Ansprüche, wobei das Kernpolymer der Kern-Schale-Verbindung (A) eine Glasübergangstemperatur von weniger als 20°C aufweist und das Schalenpolymer eine Glasübergangstemperatur von mehr als 20°C aufweist.

11. Zusammensetzung nach einem der vorhergehenden Ansprüche, wobei die Gewichtsmenge des Kerns im Bereich von 60 bis 95% des Gesamtgewichts der Kern-Schale-Verbindung liegt.

12. Zusammensetzung nach einem der vorhergehenden Ansprüche, wobei die Größe der Kern-Schale-Verbindungen zwischen 50 und 600 nm liegt.

13. Zusammensetzung nach einem der vorhergehenden Ansprüche, wobei die PHA aus Polymilchsäure (PLA) und Polyglykolsäure (PGA) ausgewählt ist.

14. Verfahren zur Herstellung der Zusammensetzung nach einem der vorhergehenden Ansprüche, bei dem man die PHA, (A), (B), gegebenenfalls (C) und gegebenenfalls Additive wie ein Nukleierungsmittel durch Kneten oder Extrusion mischt.

15. Verfahren zur Herstellung der Zusammensetzung nach einem der Ansprüche 1 bis 13, bei dem man:
- in einem ersten Schritt eine Mischung von (A), (B) und gegebenenfalls (C) mischt, wobei man einen Schlagzähigkeitsmodifikator erhält, und dann
- in einem zweiten Schritt den Schlagzähigkeitsmodifikator aus dem ersten Schritt mit der PHA mischt.

16. Teil oder Objekt, wie eine Verpackung, umfassend eine Zusammensetzung nach einem der Ansprüche 1 bis 13 oder eine aus dem Verfahren nach Anspruch 14 oder 15 erhaltene Zusammensetzung.

17. Verfahren zur Herstellung eines Teils oder eines Objekts nach Anspruch 16, umfassend einen Schritt, bei dem man die Zusammensetzung formt, beispielsweise durch Spritzguss, Pressen oder Kalandrieren, wobei das Teil bzw. das Objekt gegebenenfalls einem Temperschritt unterworfen wird.

## Claims

1. A polyhydroxyalkanoic acid (PHA) composition also comprising:
(A) an elastomeric compound of core-shell type;
(B) and a statistic olefinic copolymer comprising an ethylenic monomer bearing an epoxy function.

2. The composition as claimed in claim 1, **characterized in that** the ethylenic monomer bearing an epoxy function is glycidyl (meth)acrylate.

3. The composition as claimed in either of the preceding claims, **characterized in that** (B) is a copolymer of ethylene, of glycidyl methacrylate and optionally of an alkyl (meth)acrylate in which the alkyl chain comprises from 1 to 30 carbon atoms.

4. The composition as claimed in one of the preceding claims, also comprising an additional olefinic polymer (C) other than the olefinic copolymers comprising an ethylenic monomer bearing an epoxy function.

5. The composition as claimed in the preceding claim, in which the additional olefinic polymer (C) is a copolymer of ethylene and of an alkyl (meth)acrylate, a copolymer of ethylene and a carboxylic acid vinyl ester, a copolymer of ethylene and of a (meth)acrylic acid or an ionomer, preferentially a copolymer of ethylene and of an alkyl acrylate with an alkyl chain ranging from 1 to 20, for instance methyl acrylate, ethylene acrylate or n-butyl acrylate.

6. The composition as claimed in either of claims 4 and 5, in which the mass ratio (B) / (C) is within the range from 90/10 to 10/90 and preferentially from 75/25 to 40/60.

7. The composition as claimed in one of the preceding claims, in which the mass ratio (A)/((B) + optional (C)) is within the range from 90/10 to 10/90, for example 85/15 to 40/60, advantageously from 80/20 to 50/50 and preferentially from 75/25 to 60/40.

8. The composition as claimed in one of the preceding claims, in which the amount of ((A) + (B) + optional (C)) is within the range from 1% to 30% by mass of the total composition, advantageously from 2% to 15% and preferentially from 3% to 9%.

9. The composition as claimed in one of the preceding claims, in which the amount, in polymerized form, of ethylenic monomer comprising an epoxy function is within the range from 0.01% to 2%, advantageously from 0.02% to 1% and preferentially from 0.03% to 0.7% by mass of the total composition.

10. The composition as claimed in one of the preceding claims, in which the polymer of the core of the core-shell compound (A) has a glass transition temperature of less than 20°C and the polymer of the shell has a glass transition temperature of greater than 20°C.

11. The composition as claimed in one of the preceding claims, in which the mass amount of core is within the range from 60% to 95% of the total mass of the core-shell compound.

12. The composition as claimed in one of the preceding claims, in which the size of the core-shell compounds is between 50 and 600 nm.

13. The composition as claimed in one of the preceding claims, in which the PHA is chosen from polylactic acid (PLA) and polyglycolic acid (PGA).

14. A process for preparing the composition as claimed in any one of the preceding claims, in which the mixture of PHA, of (A), of (B), of the optional (C) and optionally of additives such as a nucleating agent is prepared by blending or extrusion.

15. A process for preparing the composition as claimed in one of claims 1 to 13, in which the following are prepared:
- in a first step, a mixture of (A), (B) and optional (C) to form an impact modifier, and then
- in a second step, the mixture of the impact modifier obtained from the first step with PHA.

16. A part or object, such as a wrapping, comprising a composition as claimed in one of claims 1 to 13 or a composition derived from the process as claimed in claim 14 or 15.

17. A process for manufacturing a part or object as claimed in claim 16, comprising a step of forming the composition, for example by injection-molding, pressing or calendering, said part or said object optionally undergoing an annealing step.
